# EUROPEAN PATENT APPLICATION

(11) **EP 1 191 719 A2**
(43) Date of publication of application: **27.03.2002**
(21) Application number: 01122361.7
(22) Date of filing: 19.09.2001
(51) Int. Cl.: H04B 17/00

(54) **Method and apparatus for signal quality estimation in a communication system**

(30) Priority: 26.09.2000 GB 0023547
(71) Applicant: MOTOROLA, INC., Schaumburg, IL 60196 (US)
(72) Inventor: Aftelak, Andrew John, Basingstoke, Hants RG24 8YD (GB)
(74) Representative: Treleven, Colin

(57) **Abstract**

A method of estimating signal quality, the method including the steps of a) taking (110) complex samples of a decoded signal at its symbol rate, b) mapping (130) each of the samples by expressing its phase modulo π/*n* where *n* is an integer equal to the number of points in the signal's symbol constellation divided by 2 and where all of the signal's transmitted constellation points have the same amplitude, c) rotating (140) each of the modulo π/*n* samples by -π/2*n*, d) calculating (150) the ratio of the imaginary part of each of the rotated samples to its real part, thereby providing an instantaneous square root of an I/C ratio, and e) calculating (170) a variance associated with a plurality of the I/C ratios, thereby estimating the signal quality of the signal.

Apparatus (402, 410, 502) implementing the methods of the invention is provided.

## Description

### Field Of The Invention

The present invention relates to communications systems. In particular, the invention relates to methods and apparatus for estimating transmission signal quality.

### Background Of The Invention

When effecting handover of a call in a cellular radio system, such as Terrestrial Trunked Radio (TETRA), a mobile station (MS) generally measures the quality of the signal received from its serving base transmission station (BTS) and its neighboring BTSs and picks the BTS with the best signal quality. The TETRA standard defines this quality measurement to be received signal strength (RSSI). However, in an interference-limited system, such as TETRA, GSM, or any other cellular-type system where the density of BTSs is great enough such that the predominant cause of signal degradation is interference from other BTSs rather than the noise generated in the receiver, RSSI is not a good measurement of quality. In such a case, alternative signal quality estimates (SQEs) that measure the signal-to-interference ratio are required.

Two basic characteristics of a good measurement of signal quality are large dynamic range and high accuracy. Here high accuracy equates to a low variance in the measurement. These characteristics allow the quality of radio signals from various base sites to be accurately compared to determine the site with the best signal quality.

The desirability of these good measurement characteristics may be illustrated with reference to Fig. 1A. In Fig. 1A, contour lines 10, 12, and 14 represent signal qualities of radio transmissions by BTSs A and B and at various distances from the BTSs. For the purpose of the illustration, signal quality values 1, 2, and 3 are used to represent the relative signal qualities at each of contour lines 10,12, and 14. An MS travelling along a line from serving BTS A to BTS B will experience the best possible service if it changes its serving BTS to BTS B when the quality offered by each BTS is equal, i.e., at a point C.

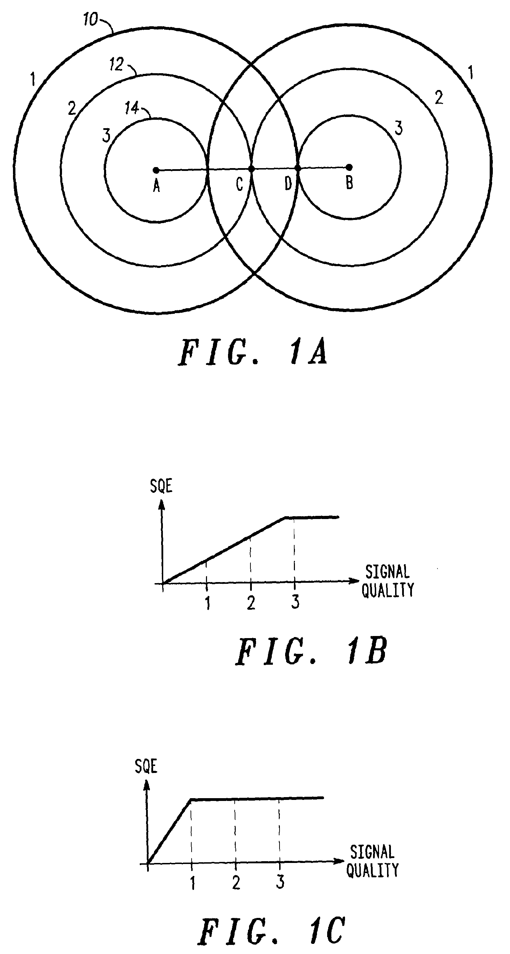

Two possible Signal Quality Estimates are graphically illustrated in Figs. 1B and 1C, to which reference is now additionally made. Fig. 1B represents an SQE having a relatively good dynamic range. Fig. 1C representing an SQE having a relatively poor dynamic range.
An MS employing an SQE with the range of Fig. 1B would be able to determine almost immediately that it passed the optimum handover point C in Fig. 1A in the direction of BTS B. This is because the signal from BTS B would be measurably better than that from BTS A. The MS would thus initiate handover almost immediately after passing point C in the direction of BTS B, allowing for normal systemic delay.

In contrast, an MS employing an SQE with the range of Fig. 1C would not be able to distinguish between the quality of the two signals until the quality from BTS A had dropped below level 1, since the dynamic range of the SQE is limited. Thus, handover from BTS A to BTS B would not occur until MS reaches point D in Fig. 1A, with MS needlessly suffering from low signal quality between points C and D.

A similar scenario would apply for SQEs of greater and lesser sensitivity to variances in signal quality, with a more sensitive SQE resulting in an earlier handover and, therefore, better average signal quality from the MS vantage.

It is also important to have an SQE with a large dynamic range, to allow for differentiation between the quality of signals from two BTSs. This is the case even when the difference in quality experienced by the user, such as the speech quality, is not perceptible, as this ensures not only that the current quality is maintained, but also that the probability of continued good quality of service is maximized.

In addition to dynamic range and accuracy, it is also desirable for the SQE to have a short measurement time, thus minimizing the delay in changing BTSs, and to be of low incremental complexity to the receiver.

Having established that a good signal quality measurement should have a large dynamic range and high accuracy, just what defines good signal quality remains to be determined. Preferably, the SQE should be related to the quality perceived by the user. This is because, in voice-dominated digital radio systems, the voice quality is perhaps the most important aspect of the call to the user. As voice quality is difficult to measure objectively, the signal bit error rate (BER) may be used as a measurement of user-perceived quality, to which the SQE should be related. Furthermore, the SQE should also relate to the probability that the BER will remain at an acceptable level. In many radio systems, the signal-to-noise-plus interference ratio (C/(I+N)) is used as an SQE, as it is related to error rate for a given channel condition, and the margin in C/(I+N) over the threshold for acceptable BER is a reasonable indication of the likelihood that the signal quality will remain good.

SQE measurements are typically taken of both the serving BTS and neighboring BTSs in determining when to effect handover. The ability of the MS to take measurements of neighboring BTSs depends in large part on which transmissions are captured from the neighboring BTSs. In a TETRA system, the SQE measurements should preferably be taken of a continuous downlink transmission, should support both synchronized and unsynchronized BTSs, should take into account oscillator switching time, and should support both half-duplex and full-duplex calls. SQE measurements taken under such circumstances should attempt to capture at least 65% of a slot's transmissions in order to ensure that at least one training sequence is captured. However, the position of the training sequence in the captured data stream is unknown, and SYNC information would therefore not be recovered. Furthermore, data blocks other than the Access Assignment Channel (AACH) would not be recovered.

The problem, simply stated, is to find an SQE that has good dynamic range, high accuracy, low complexity, fast convergence, is related to C/(I+N), and meets system-specific constraints such as those discussed above for TETRA systems.

There are several known technologies for estimating signal quality, including those based on signal strength, Euclidean distance measurement, bit error rate estimates, and signal envelope fluctuations. These are now discussed.

Signal strength SQEs provide an indication of the best BTS to serve an MS in systems that are range-limited. However, such SQEs are inadequate in interference-limited systems as the measured signal strength can not discriminate between wanted and unwanted signals.

Euclidean distance measurements calculate the mean squared distance of the received data point from the position it should be at in the modulation constellation. This measurement requires a good estimate of the channel impulse response and of the data values to form a local estimate of the correct data point. Hence, both frame and data symbol timing must be recovered to support this measurement, which requires that at least one training sequence be captured for processing. Such systems' burst structure is specifically designed to give a good single-tap estimate of the channel impulse response by employing strategically placed training sequences and pilot symbols. The estimate of the channel is required for reliable and coherent detection. TETRA, which is designed for differential detection, does not provide for pilot symbols, and channel estimation and adaptive prediction are therefore not as accurate.

Bit error rate estimates may also be used as a basis for estimating signal quality. GSM cellular telephone systems make signal quality estimates based on comparing re-encoded data recovered from a slot with hard decision detected data from the received slot. Differences between the hard detected data and the re-encoded data provide an estimate of the raw channel bit error rate (i.e., uncoded error rate). In TETRA systems, the only data sequence captured whole that could be used is the AACH sequence, which contains 14 bits of data and 16 bits of CRC, as training sequences cannot be used due to simulcast problems. With only 14 bits of data per slot, the BER at 25 dB would have to be measured over 250 slots of data for an accurate estimation.

The measurement of signal envelope fluctuations is described in "Co-Channel Interference Measurements Method for Mobile Communications", S. Kozono, IEEE Transactions on Vehicular Technology, vol. VT-36, no. 1, Feb 1987, pp. 7-13, which describes how the envelope of the sum of two interfering signals contains components at the different frequencies of the two signals' carriers. Carrier-to-interference is measured by isolating the beat frequency components from the more slowly varying Rayleigh fading. In "On Co-Channel Interference Measurements", J. Chen, Conference of the Proceedings of PIMRC 1997, pp. 292-296, the performance of the method is extended in noisy conditions and to multiple interferers. However, as the TETRA modulation does not have a constant envelope, the signal envelope varies at multiples of the symbol rate. Simulations have shown that the dynamic range of this method is poor when used for TETRA, and that the averaging time is prohibitively long.

Another signal quality estimation method known as the orthogonal data method is described in "In-service Signal Quality Estimation for TDMA Cellular Systems", M. Austin & G. Stueber, Wireless Personal Communications 2, 1995, pp. 245-254. In this technique the received signal is multiplied by a data sequence orthogonal to the transmitted data sequence. Effectively, the method measures the interference plus noise component orthogonal to the data vector. Unfortunately, this technique is relatively complex and is difficult to implement.

A signal quality estimation method that overcomes disadvantages of known signal quality estimation methods is therefore required.

### Summary Of The Invention

In accordance with a preferred embodiment of the present invention, a method of estimating signal quality is provided, the method including the steps of a) taking complex samples of a decoded signal at its symbol rate, b) mapping each of the samples by expressing its phase modulo π/*n* where *n* is an integer equal to the number of points in the signal's symbol constellation divided by 2, and where all of the signal's transmitted constellation points have the same amplitude, c) rotating each of the modulo *π*/*n* samples by -π/2*n*, d) calculating the ratio of the imaginary part of each of the rotated samples to its real part, thereby providing an instantaneous square root of an I/C ratio, and e) calculating a variance associated with a plurality of the I/C ratios, thereby estimating the signal quality of the signal.

Further in accordance with a preferred embodiment of the present invention the calculating step e) includes calculating a variance of the I/C ratios.

Still further in accordance with a preferred embodiment of the present invention the calculating step e) includes calculating a variance of a plurality of inverse tangents of the I/C ratios.

Additionally in accordance with a preferred embodiment of the present invention the taking step a) includes differentially decoding the signal at its symbol rate.

Moreover in accordance with a preferred embodiment of the present invention the mapping step b) includes mapping each of the samples to an upper right QPSK quadrant.

Further in accordance with a preferred embodiment of the present invention the mapping step b) includes mapping where each of the samples has a positive real part.

Still further in accordance with a preferred embodiment of the present invention the rotating step c) includes rotating each of the modulo π/2 samples by -π/4.

Additionally in accordance with a preferred embodiment of the present invention the calculating step d) includes calculating where the real part of the sample exceeds a preset threshold.

In accordance with another preferred embodiment of the present invention, a method of estimating signal quality is also provided, the method including the steps of a) differentially decoding a signal at its symbol rate, b) taking complex samples of the decoded signal, c) mapping each of the samples having a positive real part to an upper right QPSK quadrant by expressing its phase modulo π/2, d) rotating each of the modulo π/2 samples by -π/4, e) calculating the ratio of the imaginary part of each of the rotated samples to its real part, where the real part of the sample exceeds a preset threshold, thereby providing an instantaneous square root of an I/C ratio, and f) calculating a variance of a plurality of the I/C ratios, thereby estimating the signal quality of the signal.

Further in accordance with a preferred embodiment of the present invention the method further includes the step of performing steps a) - f) for all symbols in a captured slot.

Still further in accordance with a preferred embodiment of the present invention the method further includes the step of averaging the variances for a plurality of the slots.

Additionally in accordance with a preferred embodiment of the present invention, the mapping step includes the step of swapping the real and imaginary parts of any of the samples having a negative imaginary part.

A radio receiver in accordance with the present invention comprises: means for differentially decoding a received signal at its symbol rate; means for taking complex samples of the decoded signal; means for mapping each of said samples having a positive real part to an upper right QPSK quadrant by expressing its phase modulo π/2; means for rotating each of said modulo π/2 samples by -π/4; means for calculating the ratio of the imaginary part of each of said rotated samples to its real part, thereby providing an instantaneous square root of an I/C ratio; and means for calculating a variance of a plurality of said I/C ratios, thereby estimating the signal quality of said signal.

The invention also provides a TETRA cellular radio communications system comprising a radio receiver in accordance with the invention as described above.

The phase-based Signal Quality Estimation of the invention has both a good performance, and at the same time retains low complexity. The invention has advantages for hand-over performance in a radio communications receiver.

### Brief Description Of The Drawings

The present invention will be understood and appreciated more fully from the following detailed description taken in conjunction with the appended drawings in which:
Fig. 1A is a simplified pictorial illustration representing signal quality at various distances from BTSs A and B;
Fig. 1B is a simplified graphical illustration of a signal quality estimate having a relatively good dynamic range;
Fig. 1C is a simplified graphical illustration of a signal quality estimate having a relatively poor dynamic range;
Fig. 2 is a simplified flowchart illustration of a method of estimating signal quality, operative in accordance with a preferred embodiment of the present invention;
Fig. 3 is a simplified graphical illustration depicting the performance of a simulation of the method of Fig. 2;
Figure 4 illustrates the general scheme of a cellular radio communications system; and
Figure 5 illustrates a radio receiver in accordance with the present invention.

### Detailed Description Of Preferred Embodiments

The present invention seeks to provide methods and apparatus for estimating transmission signal quality in communications systems that overcome disadvantages of the prior art discussed hereinabove. The communication system may be a TETRA radio communication system.

A phase-based SQE method is provided such that, after differential decoding, the received signal sampled at the symbol timing points forms a quadrature-phase shift keying (QPSK) constellation. Fading causes the amplitude of the points to change along the radial direction. However, due to the fading being relatively slow compared to the symbol rate, the phase of the constellation points typically remains ±π/4 and ±3π/4 rad. Hence, the variation in phase of the decoded QPSK constellation away from the expected angles is useful as a measurement of signal quality. Furthermore, since a carrier frequency offset causes a fixed phase change in the constellation points, a measurement of the variance of the phase about the mean phase rather than about the expected ±π/4 and ±3π/4 rad positions is robust to frequency offsets.

Essentially, the phase deviation of the constellation away from its expected and/or mean position is the arc tangent of the tangential component, which may be regarded as the interference component, while the radial component may be regarded as the signal component. Hence, the mean square phase deviation is the average of the instantaneous I/C ratio, as opposed to the average interference to average signal ratio. In conventional terms, the I/C ratio is the interference power divided by the signal power, whereas the C/I ratio is the signal power divided by the interference power. For an individual measurement, one is the reciprocal of the other. However C/I is usually understood as average signal power divided by average interference power. The present invention, however, relies on a phase measurement that is the average of the instantaneous I/C, and this is not the reciprocal of the C/I.

Finally, the average of the instantaneous ratio of the tangential and radial components may be calculated, thus obviating the arctan function and providing a more linear relationship with the I/C ratio when the C/I ratio is large.

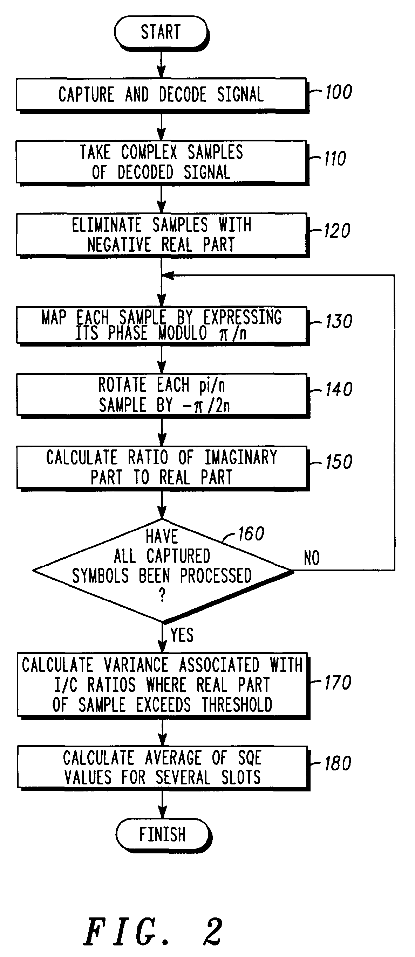

Reference is now made to Fig. 2. Fig. 2 is a simplified flowchart illustrating a method of estimating signal quality, operative in accordance with a preferred embodiment of the present invention.

In a typical receiver which measures signal quality, a signal is captured by the receiver. In time division multiple access (TDMA) systems, the signal captured would typically be a part of the slot of information sent by a transmitter. In a digital receiver, the received signal captured by the receiver is typically sampled by an analog-to-digital converter. "Complex samples" as used herein refers to the set of complex baseband samples taken, stored, and processed by the receiver, or a subset of these samples.

In the method of Fig. 2, a signal is typically differentially decoded at the symbol rate (step 100). Complex samples are then taken of the decoded signal (step 110). Samples with a negative real part are then preferably eliminated (step 120), as samples with a positive real part are more robust to carrier breakthrough distortion than those with a negative real part. Each sample is then mapped by expressing its phase modulo *π*/*n* where *n* is an integer equal to the number of points in the signal's symbol constellation divided by 2, and where all of the signal's transmitted constellation points have the same amplitude (step 130). Preferably, each symbol is mapped to the upper right QPSK quadrant by expressing its phase modulo π/2. This is preferably achieved by:
(i) leaving samples with a positive imaginary part unchanged; and
(ii) for samples with a negative imaginary part, making the imaginary part positive, and swapping the real and imaginary parts.

Each modulo *π*/*n* sample is then rotated by *-π*/2*n* (step 140). Where QPSK is used, each modulo π/2 sample is then rotated by -π/4, so that it would lie on the real axis if the signal contained no interference or distortion component. The ratio of the imaginary part to the real part is then calculated to represent the instantaneous square root of the I/C ratio (step 150). This procedure is preferably repeated for all the symbols in the signal captured from a single transmitted slot (step 160).

Once all the individual I/C ratios for all symbols captured in a single transmitted slot are calculated, a variance associated with the I/C ratios is calculated, preferably if the real part of the sample exceeds a preset threshold (step 170). Thus, if a real part of a sample doesn't exceed the threshold it is not used for the variance calculation. This threshold rejects signals with a very small amplitude (i.e., rejects data from deep fades). The threshold value may be determined using any conventional technique and is preferably set to provide an SQE with optimal dynamic range and variance characteristics. Experimentation has shown that such a threshold improves the variance of the SQE measurement. The variance calculation associated with the I/C ratios may be of the I/C ratios themselves or of the inverse tangents of the I/C ratios.

Valid I/C measurements are those measurements that are neither rejected on the grounds that the original unrotated sample had a negative imaginary part, nor rejected because the rotated real part was less than the threshold. The variance of these valid I/C measurements represents the measured SQE for the slot. The SQE values from several slots are then preferably averaged to improve the accuracy of the measurement, see step 180.

It is appreciated that the steps of the method of Fig. 2 may be performed in a different order than that which is described hereinabove and/or that the method of Fig. 2 may be performed without one or more of its steps and still result in a useful SQE. Furthermore, it is possible to form SQEs by averaging a function of the ratio of the imaginary part to the real part, such as the exponent of the ratio.

In the flowchart of figure 2, step 170 includes the step of thresholding the real parts of each sample. However, the same reduction in the number of samples to be processed can be achieved by instead using an analogous threshold in another step of the process. For example, step 150 could involve ratio calculations only for samples whose real part exceeds a threshold.

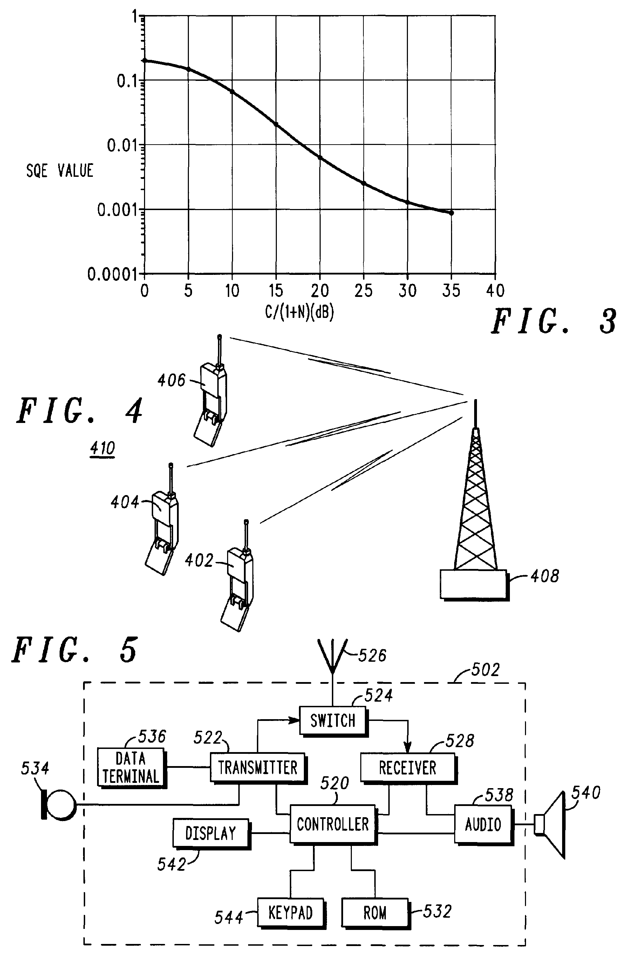

Reference is now made to Fig. 3. Fig. 3 is a simplified graphical illustration depicting the performance of a simulation of the method of Fig. 2, for a TETRA system. The method illustrated in Fig. 2 is for a TETRA system operating in a TU50 channel, i.e. a radio channel considered typical for a receiver operating in a typical urban situation and travelling at 50 km/h. The dynamic range of the SQE algorithm is the C/(I+N) up to which the measured SQE can easily differentiate between signals with differing C/(I+N) ratios, i.e. the upper value of C/(I+N) before the curve begins to flatten out. The simulated dynamic range of the method of Fig. 2 is shown to be between 30 dB and 35 dB for TU50 channels. Experimentation has shown that the method of Fig. 2 is also useful for more stringent channel conditions, such as those of HT200 channels, in that it reasonably differentiates between signals below 25 dB.

The methods of the invention may be used in a radio receiver for use in a cellular communications system. The cellular communications system may be a TETRA cellular radio communications system.

A radio receiver in accordance with the present invention comprises: means for differentially decoding a received signal at its symbol rate; means for taking complex samples of said decoded signal; means for mapping each of said samples having a positive real part to an upper right QPSK quadrant by expressing its phase modulo π/2; means for rotating each of said modulo π/2 samples by -π/4; means for calculating the ratio of the imaginary part of each of said rotated samples to its real part, thereby providing an instantaneous square root of an I/C ratio; and means for calculating a variance of a plurality of said I/C ratios, thereby estimating the signal quality of said signal.

The means for calculating a variance may only calculate the variance for ratios having a real part of the sample exceeding a preset threshold. The preset threshold may be set so as to reject signals from deep signal fades. Such a threshold would be one that rejected signals with a very small amplitude.

Portable and mobile radios in a cellular communications system are normally arranged to communicate with one another through a base station. The radios and the base station are together referred to as a Personal Mobile Radio (PMR) system. Several base stations may be linked together to form the cellular communications network. A radio can therefore communicate with any other radio which is within communication range of one of the base stations of the network.

Some PMR radios are capable of communicating with other radios directly, without the communication passing through a base station. This mode of operation is referred to as Direct Mode Operation.

Figure 4 illustrates the general scheme of a PMR radio system 410. Portable radios 402, 404 and 406 of figure 1 can communicate with a base station 408. Radios 402, 404 and 406 could equally well be mobile radios mounted in vehicles. Each of the radios shown in figure 1 can communicate through base station 408 with one or more other radios. If radios 402, 404 and 406 are capable of direct mode operation, then they may communicate directly with one another or with other radios, without the communication link passing through base station 408.

Figure 5 illustrates a radio in accordance with the present invention. The radio of figure 5 may be either a portable- or a mobile radio. However, a mobile telephone may also be adapted to function in accodance with the principles of the invention.

The radio 502 of figure 5 can transmit speech from a user of the radio. The radio comprises a microphone 534 which provides a signal for transmission by the radio. The signal from the microphone is transmitted by transmission circuit 522. Transmission circuit 522 transmits via switch 524 and antenna 526.

The transmitter 502 also has a controller 520 and a read only memory (ROM) 532. Controller 520 may be a microprocessor. ROM 532 is a permanent memory, and may be a non-volatile Electrically Erasable Programmable Read Only Memory (EEPROM).

The radio 502 of figure 5 also comprises a display 542 and keypad 544, which serve as part of the user interface circuitry of the radio. At least the keypad 544 portion of the user interface circuitry is activatable by the user. Voice activation of the radio, or other means of interaction with a user, may also be employed.

Signals received by the radio are routed by the switch to receiving circuitry 528. From there, the received signals are routed to controller 520 and audio processing circuitry 538. A loudspeaker 540 is connected to audio circuit 538. Loudspeaker 540 forms a further part of the user interface.

A data terminal 536 may be provided. Terminal 536 would provide a signal comprising data for transmission by transmitter circuit 522, switch 524 and antenna 526.

In the radio of figure 5, the controller 520 can provide the means for taking complex samples of the decoded signal, the means for mapping each of the samples having a positive real part to an upper right QPSK quadrant, the means for rotating each of said modulo π/2 samples by -π/4, the means for calculating the ratio of the imaginary part of each of the rotated samples to its real part, and the means for calculating a variance of a plurality of said I/C ratios. Thus the radio of figure 5 can estimate the quality of the received signal.

Either the receiver circuitry 528 or the controller 520 may provide the means for differentially decoding the received signal at its symbol rate.

Controller 528 may be adapted such that it only calculates the variance for ratios having a real part of the sample exceeding a preset threshold. The preset threshold may be set so as to reject signals from deep signal fades. Such a threshold would be one that rejected signals with a very small amplitude.

Controller 520 may be an application specific integrated circuit.

While the methods and apparatus disclosed herein may or may not have been described with reference to specific hardware or software, the methods and apparatus have been described in a manner sufficient to enable persons of ordinary skill in the art to readily adapt commercially available hardware and software as may be needed to reduce any of the embodiments of the present invention to practice without undue experimentation and using conventional techniques.

While the present invention has been described with reference to a few specific embodiments, the description is intended to be illustrative of the invention as a whole and is not to be construed as limiting the invention to the embodiments shown. It is appreciated that various modifications may occur to those skilled in the art that, while not specifically shown herein, are nevertheless within the true scope of the invention.

## Claims

1. A method of estimating signal quality, the method comprising the steps of:
a) taking (110) complex samples of a decoded signal at its symbol rate;
b) mapping (130) each of said samples by expressing its phase modulo *π*/*n*, where *n* is an integer equal to the number of points in said signal's symbol constellation divided by 2 and where all of said signal's transmitted constellation points have the same amplitude;
c) rotating (140) each of said modulo *π*/*n* samples by -π/2*n*;
d) calculating (150) the ratio of the imaginary part of each of said rotated samples to its real part, thereby providing an instantaneous square root of an I/C ratio; and
e) calculating (170) a variance associated with a plurality of said I/C ratios, thereby estimating the signal quality of said signal.

2. A method according to claim 1, wherein
said calculating step e) comprises calculating a variance of said I/C ratios.

3. A method according to claim 1, wherein
said calculating step e) comprises calculating a variance of a plurality of inverse tangents of said I/C ratios.

4. A method according to any previous claim, wherein
said taking step a) comprises differentially decoding said signal at its symbol rate.

5. A method according to any previous claim, wherein
said mapping step b) comprises mapping each of said samples to an upper right QPSK quadrant.

6. A method according to claim 5, wherein
said mapping step b) comprises mapping where each of said samples has a positive real part.

7. A method according to claim 5, wherein
said rotating step c) comprises rotating each of said modulo π/2 samples by -π/4.

8. A method according to any previous claim, wherein
said calculating step e) comprises calculating the variance for ratios having a real part of the sample exceeding a preset threshold.

9. A method according to claim 8, wherein
the preset threshold is set so as to reject signals from deep signal fades, preferrably rejecting signals with a very small amplitude.

10. A method of estimating signal quality, the method comprising the steps of:
a) differentially decoding (100) a signal at its symbol rate;
b) taking (110) complex samples of said decoded signal;
c) mapping (130) each of said samples having a positive real part to an upper right QPSK quadrant by expressing its phase modulo π/2;
d) rotating (140) each of said modulo π/2 samples by -π/4;
e) calculating (150) the ratio of the imaginary part of each of said rotated samples to its real part, thereby providing an instantaneous square root of an I/C ratio; and
f) calculating (170) a variance of a plurality of said I/C ratios, thereby estimating the signal quality of said signal.

11. A method of estimating signal quality in accordance with claim 10, wherein
the variance is only calculated in step f) for ratios having a real part of the sample exceeding a preset threshold.

12. A method according to claim 11, wherein
the preset threshold is set so as to reject signals from deep signal fades, preferably rejecting signals with a very small amplitude.

13. A radio receiver for use in a cellular communications system, the radio receiver comprising:
a) means for differentially decoding (100) a received signal at its symbol rate;
b) means for taking (110) complex samples of the decoded signal;
c) means for mapping (130) each of said samples having a positive real part to an upper right QPSK quadrant by expressing its phase modulo π/2;
d) means for rotating (140) each of said modulo π/2 samples by -π/4;
e) means for calculating (150) the ratio of the imaginary part of each of said rotated samples to its real part, thereby providing an instantaneous square root of an I/C ratio; and
f) means for calculating (170) a variance of a plurality of said I/C ratios, thereby estimating the signal quality of said signal.

14. A radio receiver in accordance with claim 13, wherein
the means for calculating a variance is only calculated in step f) for ratios having a real part of the sample exceeding a preset threshold.

15. A radio receiver in accordance with claim 14, wherein
the preset threshold is set so as to reject signals from deep signal fades, preferably rejecting signals with a very small amplitude.

16. A TETRA cellular radio communications system comprising a radio receiver in accordance with any of claims 13-15.
